# EUROPÄISCHE PATENTSCHRIFT

(11) **EP 1 369 020 B1**
(45) Veröffentlichungstag und Bekanntmachung des Hinweises auf die Patenterteilung: **09.11.2005**
(21) Anmeldenummer: 03012706.2
(22) Anmeldetag: 04.06.2003
(51) Int. Cl.: A01D 41/127, A01B 79/00

(54) **Verfahren zur Erstellung eines Schnitthöhenprotokolls im laufenden Arbeitsprozess von Erntemaschinen**
Method to produce a height cut protocol during the working process of harvesting machines
Méthode pour l'élaboration d'un protocole de hauteur de coupe durant le déroulement du processus de travail de machines de récolte

(30) Priorität: 05.06.2002 DE 10225098
(43) Veröffentlichungstag der Anmeldung: 10.12.2003
(73) Patentinhaber: CLAAS Saulgau GmbH, 88348 Bad Saulgau (DE)
(72) Erfinder: Gebele, Josef, 88348 Bad Saulgau (DE); Prenzler, Jürgen, 88377 Oberwaldhausen (DE); Rauch, Hans, 88348 Bad Saulgau (DE)

(56) Entgegenhaltungen:
- US-A- 5 524 424
- US-A- 5 978 720
- US-B1- 6 272 819

## Beschreibung

Die Erfindung beschreibt ein Verfahren zur Ermittlung von Daten zur Erstellung einer Dokumentation in Form eines Schnitthöhen-Protokolls während des laufenden Arbeitsprozesses einer Erntemaschine gemäss dem Oberbegriff des Anspruchs 1.

Landwirte als Produzenten von stängeligem Erntegut, wie beispielsweise Silomais, haben aus wirtschaftlichen Gründen ein grundsätzliches Interesse daran, den Ertrag der Grünfutterernte zu optimieren. Mais in gehäckselter Struktur wird immer mehr auch als Handelsware produziert und vertrieben. Optimieren in diesem Sinne bedeutet, Quantität und Qualität in eine angestrebte Beziehung zueinander zu bringen. Beispielsweise.

Käufer dieser Handelsware erwarten dabei ein Höchstmaß an Qualität. Die eingestellte Schnitthöhe am Vorsatzgerät eine Häckslers, und damit die verbleibende Stoppellänge auf dem Feld, nimmt erheblichen Einfluss auf den Flächenertrag einerseits aber andererseits ebenso auch auf die Qualität der erzeugten Futtermasse. Dabei ist eine geringe Schnitthöhe aus der Sicht der Qualitätsoptimierung weniger wünschenswert.

Niedrige Schnitthöhen können, bedingt durch an Stängeln - z.B. die von Maispflanzen - anhaftende Bodenanteile wie Sandkörner, den Verschleiß von Mähwerkzeugen an Arbeitseinheiten und nachfolgenden Maschinenbauteilen, wie Häckselaggregate, erheblich fördern. Dieses kann schon aus Kostengründen nicht im Sinne der Betreiber derartiger Maschinen sein.

Andererseits nimmt die pfluglose Bodenbearbeitung in Verbindung mit der Direkteinsaat stetig an Bedeutung zu. Diese verlangt wiederum nach einer möglichst geringen Stoppellänge und damit nach einer möglichst geringen Schnitthöhe.

Beispielsweise die Silomaisernte wird zunehmend von Lohnunternehmern als Auftragnehmer durchgeführt. Je nach zuvor dargelegter Sichtweise können somit aufgrund unterschiedlicher Interessenslagen der Beteiligten eines derartigen Geschäftsumfelds bestehend aus Lohnunternehmern, Landwirten (Produzent) und Käufern, diese zu Interessenskollisionen führen.

Dieses kann nach der Ernte dann Fragen zur tatsächlich eingehaltenen Schnitthöhe aufwerfen, wenn sich aufgrund unterschiedlichen Beurteilungen Beanstandungen ergeben und welches unter Umständen zu streitigen Auseinandersetzungen führen kann, die mit erheblichen Kosten verbunden sein können.

Vor diesem Hintergrund zeigt sich ein Mangel hinsichtlich des späteren Nachweises der tatsächlichen eingehaltenen Schnitthöhe auf, der mit der Erfindung beseitigt werden kann.

Beispielhaft sei hier auf eine als Zuckerrohremter ausgeführte landwirtschaftliche Arbeitsmaschine, wie sie aus der US 6,272,819 bekannt geworden ist verwiesen, die zur Ermittlung des Erntegutertrages unter anderem die Länge des von der Erntemaschine aufgenommenen Erntegutes ermittelt. Während einerseits die geerntete Zuckerrohrmenge relativ genau bestimmbar ist, haftet derartigen Systemen jedoch der Nachteil an, dass sie keine Informationen über die nicht von der Erntemaschine erfasste Erntegutmenge, die maßgeblich von der Stoppelhöhe bestimmt wird, generiert. Zur Beurteilung der Arbeitsqualität einer Erntemaschine sind derartige Informationen jedoch unter verschiedensten Gesichtspunkten von erheblicher Bedeutung. Einerseits sollen Erntemaschinen möglichst niedrige Ernteverluste zulassen, zum anderen soll dass von den Erntemaschinen aufgenommene Emtegut eine hohe Qualität aufweisen, was regelmäßig die präzise Einhaltung sogenannter Mindestschnitthöhen erfordert.

Im Sinne der erfinderischen Aufgabenstellung ist es daher notwendig, die tatsächlich eingehaltene Schnitthöhe im laufenden Arbeitsprozess zu dokumentieren.

Ein derartiges Verfahren ist an bestimmte technische Vorraussetzung gebunden, die, falls sie noch nicht an Bord einer Erntemaschine nach der Erfindung vorhanden sind, geschaffen werden müssen.

Ein Teil derartiger technischer Voraussetzungen findet sich beispielsweise an Bord der selbstfahrenden Claas-Feldhäcksler der Jaguar-Baureihe

Diese verfügen bereits über eine Vorrichtung zur Einstellung einer vorwählbaren und höhenveränderbaren Schnitthöhe (Schnitthöhenvorwahl). Dabei wird die eingestellte Schnitthöhe auf einem Balkendiagram in der Fahrerkabine auf einer relativen und dimensionslosen Skala angezeigt.

Des weiteren stehen u.a. Optionen zur Datumserfassung und zur Zeit- und Wegemessung bei der Abarbeitung eines Auftrags als Teil der Betriebsdatenerfassung während des laufenden Arbeitsprozess zur Verfügung, welche eine der Grundvoraussetzungen einer mitlaufenden Dokumentation im Sinne der Erfindung bilden.

Des weiteren können vorwählbare Variable, wie beispielsweise die Arbeitsbreite eines Vorsatzgerätes, zur Betriebsdatenerfassung vorgegeben werden. Dieses dient beispielsweise der Arbeitsflächenermittlung im laufenden Arbeitsprozess.

Dabei werden in getakteten Intervallen zurückgelegte Wegstrecken erfasst, die durch die Anzahl der gesetzten Impulse pro zurückgelegter Wegstrecke, beispielsweise durch die Anzahl der Impulse/100, definiert sind.

Durch fortlaufendes Aufsummieren der gemessenen abgeernteten Teilflächen längs der zurückgelegten Fahrstrecke wird somit die abgeerntete Fläche fortlaufend erfasst. Dazu erforderliche Rechenprozesse dieser Art werden dabei von einem Mikroprozessor als Bordrechner übernommen.

Dieses Ausführungsbeispiel zeigt, wie wegabhängig gesetzte Impulse genutzt werden können, um dadurch im laufenden Arbeitsprozess Betriebsdaten systematisch zu erfassen.

Die Aufgabe der Erfindung ist es, ein Verfahren für die Erstellung eines Schnitthöhen-Protokolls während des laufenden Arbeitsprozesses innerhalb des Ernteprozesses einer Erntemaschine mit einer Arbeitseinheit zu schaffen, wobei dieses mittels einer Dokumentation dauerhaft nachgewiesen werden können soll.

Gelöst wird die Aufgabe der Erfindung mit den kennzeichnenden Merkmalen der unabhängigen Ansprüche. Weitere vorteilhafte Ausgestaltungen der Erfindung sind den abhängigen Ansprüchen, der Beschreibung und den Figurendarstellungen zu entnehmen.

### Bezugszeichenliste

- 1: Erntemaschine
- 2: Vorsatzgerät
- 3: Arbeitseinheit
- 4: Feldhäcksler
- 5: Fahrerkabine
- 6: Sensor zur Schnitthöhenmessung
- 7: Startpunkt
- 8: Endpunkt
- 9: Funktionsgraph
- 10: Schnitthöhen-Protokoll
- 11: Auswerteeinheit
- 12: Anzeige und Eingabeeinheit
- 13: Umfang
- 14: Radius
- 15: Äquidistanzlinie

- E₁,E₂,E₂,E_{N}: fortlaufend gemittelte Schnitthöhe als Effektivschnitthöhe über die Mittelwerte der Intervall-Schnitthöhen

- F: Fahrtrichtung

- H: Schnitthöhe
- Hₘᵢ: momentan gemessene Schnitthöhe im fortschreitenden Ernteprozess
- H₁: mittlere Schnitthöhe im 1. Intervall
- H₂: mittlere Schnitthöhe im 2. Intervall
- H₃: mittlere Schnitthöhe im 3. Intervall
- H_{N}: mittlere Schnitthöhe im n. Intervall

- K₁: 1. Intervallklasse
- K₂: 2. Intervallklasse
- K₃: 3. Intervallklasse
- K_{N}: n-te Intervallklasse

- S: Messtrecke
- ΔS: Intervallbreite

- T: Zeit

- ΔX: Messabstand

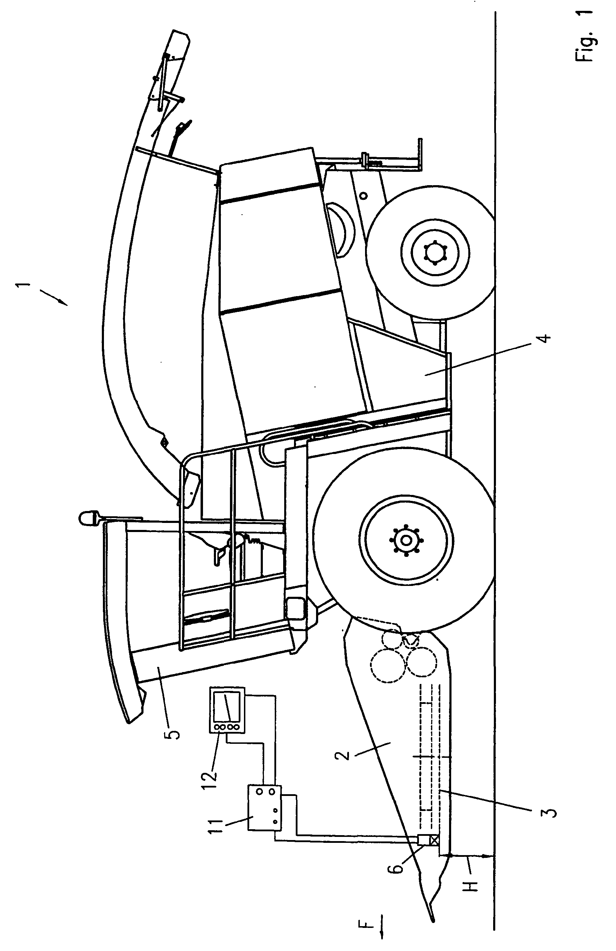

In Fig. 1 ist als Anwendungsbeispiel eines Verfahrens nach der Erfindung eine Erntemaschine 1 als Feldhäcksler mit einem Vorsatzgerät als Arbeitseinheit 3 dargestellt.

Eine Erntemaschine 1, auf der sich das Verfahren im erfinderischen Sinne anwenden läst, verfügt über ein System zur Messwertwerterfassung, welches die Schnitthöhe H im laufenden Mähbetrieb weg- oder zeitabhängig erfasst und speichert. Hardwaremäßig wird das Verfahren realisiert in Verbindung mit einer mobilen Erntemaschine 1, wobei die Schnitthöhe H durch einen Sensorsensor erfasst, einem Mikroprozessor zugeführt, in Datenspeichern gespeichert und über Ein- bzw. Ausgabegeräte wie z.B. Auswerteeinheiten 11 und/oder Anzeige und Eingabeeinheiten 12 visualisiert und editiert werden kann.

Ein- Ausgabeeinheiten, wie Terminals und/oder Multifunktionsgriffe einer Steuerung, ermöglichen die Einflussnahme auf die Systemvariablen und damit auf den Prozessablauf insgesamt. Somit gibt das Verfahren nach der Erfindung Auskunft über den aktuell erreichten bezüglich der Schnitthöhe H.

Ein Anwendungsbeispiel nach der Erfindung ist nachfolgend an einer Erntemaschine 1 als ein Feldhäcksler 4 mit einem Vorsatzgerät 2, erläutert und näher dargestellt. Ein derartiges Vorsatzgerät 2 beinhaltet ein Mähwerk als Arbeitseinheit 3, welches mit der Schnitthöhe H über dem Boden geführt wird.

Die Schnitthöhe H wird mit einem Sensor 6 gemessen, der beispielsweise als Laser- Sensor ausgebildet sein kann. Der Sensor 6 liefert weg- oder zeitabhängig vorgegebenen Messabständen ΔX, die momentan gemessene Schnitthöhe Hₘᵢ an den Eingang eines Mikroprozessors, der an Bord der Erntemaschine 1, beispielsweise in der Fahrerkabine 5, untergebracht ist. Der Sensor 6 kann dabei sowohl analoge als auch digitale Messwerte erzeugen. Für den Fall, das der Sensor 6 ein analoges Signal erzeugt, wird dieses in ein digitales Signal umgewandelt.

Derartige Meßsysteme können direkt oder indirekt mit der Mähwerk 3 eines Vorsatzgerätes, wie beispielsweise das eines Maisgebisses eines Feldhäckslers in Verbindung stehen, so dass das Messergebnis direkt, wie in dem dargestellten Beispiel in Fig.1, ermittelt werden kann. Es kann aber auch indirekt, beispielsweise über eine Differenzmessungen, ermittelt werden.

Prinzipiell können alle Messsysteme zum Einsatz kommen, die geeignet sind, Längen und Abstände zu ermitteln.

Indirekte Messungen können beispielsweise auch erzeugt werden durch kalibrierte Wegaufnehmer an einem Hydraulikzylinder des Hubwerks eines Vorsatzgerätes, also ohne das der direkte Abstand zwischen Schneidwerk und Boden gemessen wird.

Aber auch andere Formen der Messwertverarbeitung sind durchaus denkbar. Beispielsweise können analoge Signale auch mittels eines Analogrechners direkt weg- oder zeitabhängig integriert werden und über das Ergebnis einer derartigen Integration kann in vorgegebenen Weg- oder Zeitintervallen auf den Wert der momentanen Schnitthöhe als Durchschnittswert geschlossen werden. Auch derartige Messsysteme können für derartige Messwerterfassungen und Messwertauswertungen durchaus herangezogen werden. Die Erfassung derartige Messwerte, wie die der momentanen Schnitthöhe, kann damit also sowohl kontinuierlich als auch diskontinuierlich, analog oder digital erfolgen.

Um die zu speichernde Datenmenge, die im laufenden Arbeitsprozess entsteht, möglichst gering zu halten, ist es möglich, lediglich die errechneten Mittelwerte der Messwertintervalle zu speichern.

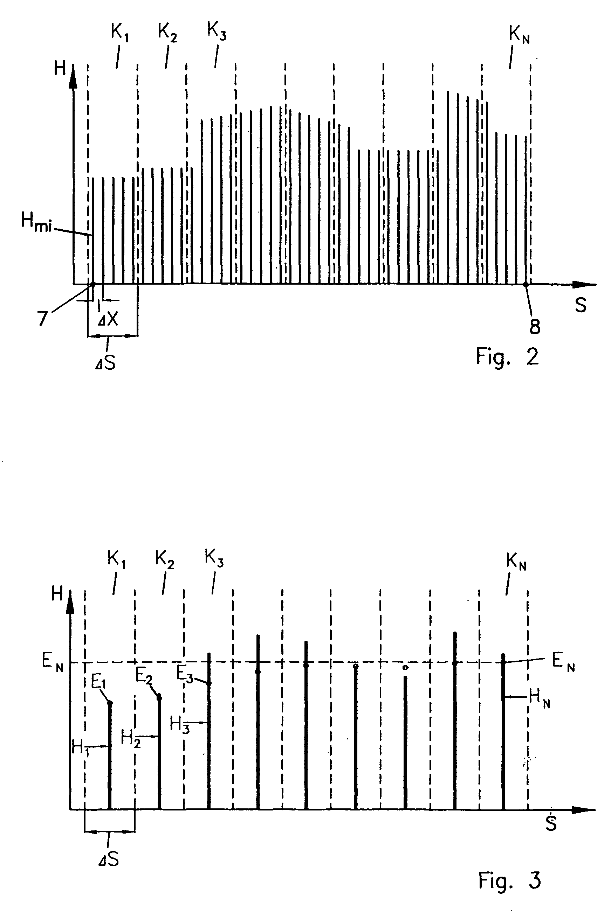

In Fig. 2 und Fig.3 sind an einem Beispiel einer wegabhängigen Messmethode und am Beispiel eines fiktiven Messwertverlaufs das Aufzeichnungs- und Auswertungsverfahren nach der Erfindung in den dargelegten Diagrammen näher erläutert.

Die Abszissenachse der in Fig. 2 und Fig. 3 dargestellten Diagramme repräsentiert einen Teil der zurückgelegten Wegstrecke S der in Fig. 1 dargestellten Erntemaschine 1 während des Arbeitsprozesses. Die Ordinatenachse repräsentiert die Schnitthöhe H der in Fig. 1 dargestellten Erntemaschine 1.

Entlang des Fahrweges liegt die Messtrecke S, beginnend am Startpunkt 7 des Arbeitsprozesses, wird periodisch wiederkehrend im Abstand ΔX die momentane Schnitthöhe Hₘᵢ durch den Sensor 6 gemessen und gespeichert. Ein Messwert ist jeweils symbolisch durch einen Balken dargestellt, wobei die Länge eines Balkens den Betrag des Messwertes der Schnitthöhe Hₘᵢ darstellt.

Nach einer festgelegten Anzahl i wiederkehrender Messungen der momentanen Schnitthöhe Hₘᵢ werden die fortlaufenden Messwerte Hₘᵢ der ihr zugehörigen Intervallklasse K₁,K₂,K₃,...Kₙ zugeordnet. Innerhalb der Intervallklasse K₁,K₂,K₃, bis Kₙ wird nun fortlaufend aus den der jeweiligen Intervallklasse K₁,K₂,K₃,...Kₙ zugehörenden und gespeicherten Messwerte der Schnitthöhe Hₘ₁, Hₘ₂, Hₘ₃ bis H_{mi,} ein Mittelwert, beispielsweise der arithmetischer Mittelwert, H₁, H₂, H₃ bis H_{N}, errechnet, der nunmehr stellvertretend für die Einzelmesswerte Hₘᵢ, seiner zugehörigen Intervallklasse K₁,K₂,K₃, bis Kₙ dieser zugeordnet wird. Danach können die Einzelmesswerte Hₘᵢ gelöscht werden. Stellvertretend für die Einzelmesswerte der momentanen Schnitthöhen Hₘᵢ gespeichert hingegen werden die Mittelwerte der Schnitthöhen H₁,H₂,H₃ bis H_{N}

Analog Fig. 2 sind in Fig.3 über die gleiche Wegstrecke als Messtrecke S nunmehr die Mittelwerte H₁,H₂,H₃ bis H_{N}, der Schnitthöhe der jeweiligen Intervallklasse K₁,K₂,K₃, bis Kₙ in Form eines Balkendiagramm zugeordnet und dargestellt. Ein Mittelwert als mittlere Schnitthöhe H₁, H₂, H₃ bis H_{N}, ist dabei jeweils symbolisch durch einen Balken dargestellt, wobei die Länge eines Balkens den Betrag eines Mittelwerts H₁, H₂, H₃ bis H_{N}, repräsentiert.

Über derartige Mittelwert H₁,H₂,H₃ bis H_{N}, hinweg kann weiterhin eine fortlaufend gemittelte Schnitthöhe E₁,E₂,E₃ bis E_{N} als Mittelwerte der Mittelwerte ermittelt werden, der ebenfalls fortlaufend der jeweiligen Intervallklasse K₁,K₂,K₃, bis Kₙ zugeordnet wird. Diese Werte kennzeichnen die bis zum Erreichen der jeweiligen Intervallklasse die momentane durchschnittliche Schnitthöhe. Damit kennzeichnet der zuletzt im laufenden Arbeitsprozess ermittelte Wert der gemittelten Schnitthöhe E_{N} stets den Durchschnittswert der Schnitthöhe über den bis dahin abgearbeiteten Arbeitsprozess gerechnet vom Starpunkt 7.

Dieser Wert kann dem Fahrer der Erntmaschine 1 auf einer optischen Anzeige in visualisierter Form ständig Auskunft über die im fortschreitenden Ernteprozess erzielte durchschnittliche Schnitthöhe E_{N} liefern.

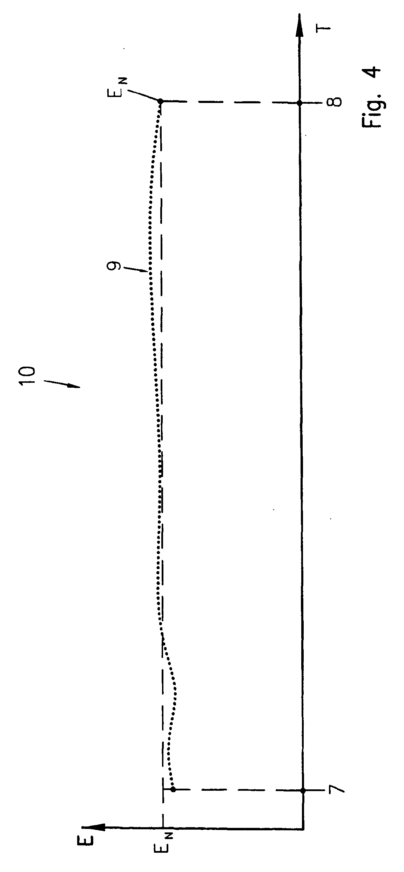

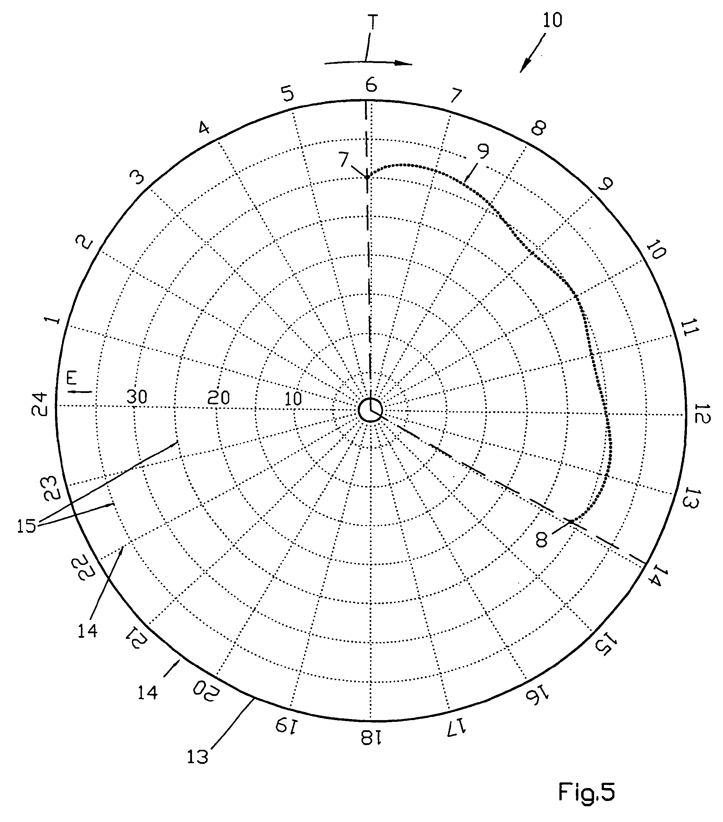

In Fig. 4 und Fig. 5 sind prinzipielle Ausführungsbeispiele für Schnitthöhen-Protokolle 10 in einer graphischen Darstellungsform erläutert.

Fig. 4 zeigt eine Darstellungsform basierend auf einem kartesischen Koordinatensystem.

Fig. 5 zeigt eine Darstellungsform basierend auf einem polaren Koordinatensystem.

In beiden Darstellungsformen ist der Verlauf der gemittelte Schnitthöhe E₁,E₂,E₃ bis E_{N} über die Zeit T vom Startpunkt 7 bis zum Endpunkt 8, d.h. über die Gesamtentwicklung des Arbeitsprozesses, dargestellt.

In Fig. 4 ist auf der Abszisse die Zeit T, und auf der Ordinate die gemittelte Schnitthöhe E basierend auf den Funktionswerten als gemittelte Schnitthöhe E₁,E₂,E₃ bis E_{N} aufgetragen. Der Verlauf des Funktionsgraphen 9 ist durch die Werte der gemittelten Schnitthöhen E₁,E₂,E₃ bis E_{N} definiert..

In Fig. 5 ist auf der Umfang 13 eines Vollkreises das Bogenmaß als Zeitachse mit der Zeit T definiert. In diesem Beispiel umfasst der Vollkreis das Zeitintervall eines Kalendertages und ist durch eine 24 Skala definiert. Die gemittelte Schnitthöhe E ist dabei auf den Radiusvektoren des polaren Koordinatensystems durch Längenangaben, z.B. in Zentimetern definiert. Konzentrische Kreise zum Koordinatenursprung stellen dabei die Äquidistanzlinien 15 als Liniengleicher Schnitthöhe H dar.

Der Verlauf des Funktionsgraphen 9 ist durch die Werte der gemittelten Schnitthöhen E₁,E₂,E₃ bis E_{N} definiert, wobei diese Werte den Betrag des jeweiligen Radiusvektors der mittleren Schnitthöhe H kennzeichnen.

Diese Darstellungsformen eignen sich in besonderer Weise zur graphischen Darstellung eines Schnitthöhen-Protokolls, da diese gut überschaubar und aussagekräftig sind hinsichtlich der durchschnittlich erzielten Schnitthöhe H und deren Entwicklung über die gesamte Jobdauer, d.h. über den gesamten Arbeitszyklus hinweg, sind.

Aber auch andere Formen der Darstellung eines Schnitthöhen-Protokolls, beispielsweise in Kurzfassung mit reinen Textangaben sind durchaus im Sinne der Erfindung möglich.

Wie in den Ausführungsbeispielen in Fig. 4 und Fig. 5 dargestellt, kann die zurück gelegte Wegstrecke S auf eine Zeitachse T umdefiniert werden, welches in der Praxis eine größere Aussagekraft besitzen dürfte.

Da die Messpunkte E₁,E₂,E₃ bis E_{N} einen zeitlichen Abstand zueinander haben, können die Messpunkte auf der Zeitachse in Abstand zueinander so dargestellt werden, dass sie rein optisch den Eindruck eines näherungsweise geschlossenen Kurvenzugs vermitteln.

Ein weiterer Vorteil dieses Auswertungsverfahrens nach der Erfindung besteht darin, das einzelne Messwertausschläge als Peaks, wie sie beispielsweise beim Ausheben am Vorgewende oder durch Störungen, die ein kurzeitiges Unterbrechen mit Anhebungen des Vorsatzgerätes erforderlich machen, keinen oder kaum erkennbaren Einfluss auf die Aussagekraft eines derartigen Protokolls besitzen. Diese für die Gesamtbeurteilung der durchschnittlichen Schnitthöhe unwesentlichen Peaks verlieren damit an Bedeutung.

Weitere Daten als übergeordnete Variable, die ebenfalls Bestandteil des Dokumentationsprozesses sein können, können Informationen über den Auftraggeber und Auftragnehmer, über die Flurbezeichnung, das geerntete Gut, über den Fahrer, über Fabrikat und Typenbezeichnung der eingesetzten Erntemaschine sein. Diese können das Schnitthöhen-Protokolls gemäß Fig. 4 oder Fig. 5 weiter vervollständigen.

Nach Beendigung des Arbeitsprozesses ist somit nicht nur der Verlauf der durchschnittlichen Schnitthöhe nachvollziehbar, sondern gleichermaßen ist mit dem Verfahren nach der Erfindung automatisch auch der Effektivwert als "gemittelter Durchschnittswert der Schnitthöhe" innerhalb der Grenzen Startpunkt 7 zu Beginn und Endpunkt 8 mit dem Ende des Arbeitsprozesses automatisch ermittelt. Falls eine graphischer Ausdruck im Sinne der Fig. 4 oder Fig. 5 nicht von Interesse ist, so liefert aber dieser Wert einen Anhaltspunkt über die durchschnittlich erzielte Schnitthöhe, welche ebenfalls als Nachweis einer Dokumentation dienen kann.

Andererseits kann es aber ebenso möglich sein, die Schnitthöhe als Prozessführungsgröße im Automatikbetrieb im Sinne eines Regelkreises vorzugeben, damit diese eingehalten werden kann.

In einer weitern Ausgestaltung der Erfindung kann diese Dokumentation auch in Verbindung mit einer Ertragskartierung GPS-gestützt erfolgen, wodurch dabei zusätzlich exakte terrestrische Angaben zu dem abgeernteten Feld dokumentiert werden können, welches die Aussagekraft der Dokumentation zusätzlich verbessert..

Die Ergebnisse der Messwerte können wahlweise auf einem internen oder externen Datenspeicher in Form eines Protokolls an Bord der Erntemaschine gespeichert werden. Sie können auch direkt an Bord des Trägerfahrzeugs mittels einer geeigneten Software auf einem Monitor, z.B. auf einer Anzeige- und Eingabeeinheit 12 abgebildet werden und auch gleichermaßen mittels eines an Bord befindlichen Druckers auf einem Papierausdruck dargestellt werden. Auch ist es möglich, die Daten mittels eines geeigneten Datenträgers. z.B. mittels einer Diskette, an einen externen Rechner zu übergeben, um diese dann von diesem auszuwerten und auszudrucken zu lassen.

Das Ergebnis kann dort ebenfalls in Papierform ausgedruckt oder auch für dokumentarische Zwecke dort auf internen oder externen Datenspeichern in digitalisierter Form in einer entsprechenden Datei langfristig gespeichert werden.

Dabei kann der Fahrer beispielsweise über zumindest eine Auswerteeinheit 11 zur Ermittlung der Schnitthöhe H, Hₘᵢ, H₁,H₂,H₃,H_{N}, E₁,E₂,E₂,E_{N}, E_{N} kombiniert mit einer Anzeige- und Eingabeeinheit 12 zur Visualisierung und Editierbarkeit der ermittelten Schnitthöhe H, Hₘᵢ, H₁,H₂,H₃,H_{N}, (E₁,E₂,E₂,E_{N}), E_{N} in Wirkverbindung stehen.

Nimmt eine landwirtschaftliche Erntemaschine 1 eine Vielzahl von Arbeitseinheiten 3 auf, so kann jeder Arbeitseinheit 3 ein Sensor 6 und eine Auswerteeinheit 11 zur Ermittlung der Schnitthöhe mit einer Anzeige- und Eingabeeinheit 12 zur Visualisierung und Editierbarkeit der ermittelten Schnitthöhen H, Hₘᵢ, H₁,H₂,H₃,H_{N}, (E₁,E₂,E₂,E_{N}), E_{N} zugeordnet sein.

Ein weiterer Vorteil der Erfindung besteht darin, dass der Auftragnehmer, beispielsweise ein Lohnunternehmer, diese Dokumentation der nunmehr fälligen Abrechnung als Nachweis der eingehaltenen Schnitthöhe beifügen kann. Andererseits kann der Produzent gegenüber seinem Kunden ebenfalls die erbrachte Schnitthöhe während der Maisernte in dokumentierter Form nachweisen.

Dieses Dokumentationsverfahren und seine Protokollierung kann grundsätzlich auf alle Erntemaschinen 1 mit Arbeitseinheiten 3 zum Ernten von stängeligem Erntegut angewandt werden. Derartige Erntemaschinen können beispielsweise Maishäcksler, Mähdrescher und selbstfahrende Mähwerke sein.

Somit kann die gemittelte Schnitthöhe E_{N} auf der Basis einen Schnitthöhen-Protokolls 10 im Sinne der Erfindung als dokumentierte Beurteilungsgröße für die durchschnittliche Schnitthöhe H eines abgeschlossenen Arbeitsprozesses im Sinne eines Auftrags herangezogen werden können.

## Patentansprüche

1. Verfahren zur Ermittlung von Daten zur Erstellung einer Dokumentation als Schnitthöhen-Protokoll während des laufenden Arbeitsprozesses einer Erntemaschine (1) mit zumindest einer Arbeitseinheit (3) zum Ernten von stängeligem Erntegut, **dadurch gekennzeichnet, dass** die momentane Schnitthöhe (Hₘᵢ) im laufenden Arbeitsprozess messtechnisch erfasst und fortlaufend gespeichert werden kann.

2. Verfahren nach Anspruch 1, **dadurch gekennzeichnet, dass** die Messwerte der Schnitthöhen (Hₘᵢ) kumulativ erfasst und gespeichert werden.

3. Verfahren nach Anspruch 1 und 2, **dadurch gekennzeichnet, dass** die kumulativ erfassten Messwerte (Hₘᵢ) zur Bildung von Mittelwerten (H₁,H₂,H₃,H_{N}), (E₁,E₂,E₂,E_{N}) bezüglich der Schnitthöhe (H) genutzt werden.

4. Verfahren nach einem oder mehreren der vorhergehenden Ansprüche, **dadurch gekennzeichnet, dass** die Messwerte (Hₘᵢ) Intervallklassen (K₁ K₂ K₃ bis K_{N}) zugeordnet werden.

5. Verfahren nach einem oder mehreren der vorhergehenden Ansprüche, **dadurch gekennzeichnet, dass** die kumulierten Messwerte (Hₘᵢ) einer Intervallklasse (K₁,K₂,K₃,bis Kₙ) zur Bildung einer mittleren Schnitthöhe (H₁,H₂,H₃,H_{N}) als Mittelwert der jeweiligen Intervallklasse (K₁,K₂,K₃,bis Kₙ) genutzt werden.

6. Verfahren nach einem oder mehreren der vorhergehenden Ansprüche, **dadurch gekennzeichnet, dass** die Beträge der mittleren Schnitthöhe (H₁,H₂,H₃,H_{N}) der jeweiligen Intervallklasse (K₁,K₂,K₃,bis Kₙ) zugeordnet, fortlaufend gespeichert werden.

7. Verfahren nach einem oder mehreren der vorhergehenden Ansprüche, **dadurch gekennzeichnet, dass** die Beträge der mittleren Schnitthöhe (H₁,H₂,H₃,H_{N}) erfasst und fortlaufend gespeichert werden.

8. Verfahren nach einem oder mehreren der vorhergehenden Ansprüche, **dadurch gekennzeichnet, dass** die Anzahl der Messpunkte der momentanen Schnitthöhe (Hₘᵢ) und/oder die Anzahl der gebildeten Intervallklassen (K₁,K₂,K₃,K_{N}) momentan erfasst und fortlaufend gespeichert werden.

9. Verfahren nach einem oder mehreren der vorhergehenden Ansprüche, **dadurch gekennzeichnet, dass** die Schnitthöhen (Hₘᵢ) und/oder (H₁,H₂,H₃, bis H_{N}) zur fortlaufenden Mittelwertbildung der gemittelten Schnitthöhe (E₁,E₂,E₂, bis E_{N}) genutzt werden.

10. Verfahren nach einem oder mehreren der vorhergehenden Ansprüche, **dadurch gekennzeichnet, dass** die Beträge der gemittelten Schnitthöhe (E₁,E₂,E₂, bis E_{N}) fortlaufend ermittelt und gespeichert werden.

11. Verfahren nach einem oder mehreren der vorhergehenden Ansprüche, **dadurch gekennzeichnet, dass** der im laufenden Arbeitsprozess ermittelte Wert der gemittelten Schnitthöhe (E_{N}) die momentane mittelte Schnitthöhe (H) des Arbeitsfortschritts von Beginn des Startpunkts (7) an darstellt.

12. Verfahren nach einem oder mehreren der vorhergehenden Ansprüche, **dadurch gekennzeichnet, dass** die ermittelten Messwerte (H₁,H₂,H₃ bis ,H_{N}) und/oder (E₁,E₂,E₃, bis E_{N}) in digitalisierter Form abrufbar gespeichert werden.

13. Verfahren nach einem oder mehreren der vorhergehenden Ansprüche, **dadurch gekennzeichnet, dass** die gebildeten Messwerte (Hₘᵢ) hinsichtlich des Schnitthöhenverlaufs sensorisch mit Messwertgebern mit analogem oder digitalem Ausgangssignal erfasst werden.

14. Verfahren nach einem oder mehreren der vorhergehenden Ansprüche, **dadurch gekennzeichnet, dass** die gebildeten Messwerte (Hₘᵢ) wegabhängig erfasst und gespeichert werden.

15. Verfahren nach einem oder mehreren der vorhergehenden Ansprüche, **dadurch gekennzeichnet, dass** die gebildeten Messwerte (Hₘᵢ) zeitabhängig erfasst und gespeichert werden.

16. Verfahren nach einem oder mehreren der vorhergehenden Ansprüche, **dadurch gekennzeichnet, dass** die mittlere Schnitthöhe (E_{N}) über die Schnitthöhe (Hₘᵢ) während des Arbeitsprozesses fortlaufend und visualisiert am Arbeitsplatz des Fahrers angezeigt werden kann.

17. Verfahren nach einem oder mehreren der vorhergehenden Ansprüche, **dadurch gekennzeichnet, dass** ein Schnitthöhenprotokoll (10) durch Betriebserfassungsdaten der Erntemaschine (1) und/oder Auftraggeber- und Auftragnehmerdaten ergänzt werden kann.

18. Verfahren nach einem oder mehreren der vorhergehenden Ansprüche, **dadurch gekennzeichnet, dass** das Schnitthöhenprotokoll (10) an Bord der Erntemaschine (1) speicherbar abgerufen und ausgelesen werden kann.

19. Verfahren nach einem oder mehreren der vorhergehenden Ansprüche, **dadurch gekennzeichnet, dass** das Schnitthöhenprotokoll über den Weg und/oder die Zeit als Mittelwert-Graph (9) auf einem Monitor an Bord der Erntemaschine (1) darstellbar ist.

20. Verfahren nach einem oder mehreren der vorhergehenden Ansprüche, **dadurch gekennzeichnet, dass** das Schnitthöhenprotokoll über den Weg und/oder die Zeit als Mittelwert-Graph (9) als Papierausdruck an Bord der Erntemaschine (1) abrufbar ausgelesen werden kann.

21. Verfahren nach einem oder mehreren der vorhergehenden Ansprüche, **dadurch gekennzeichnet, dass** ein Schnitthöhenprotokoll (10) in Verbindung mit eine GPS-Gestützten Ertragskartierung gespeichert und/oder abrufbar und/oder ausgelesen werden kann.

22. Verfahren nach einem oder mehreren der vorhergehenden Ansprüche, **dadurch gekennzeichnet, dass** die gemittelte Schnitthöhe (E_{N}) auf der Basis einen Schnitthöhen-Protokolls (10) als Beurteilungsgröße für die durchschnittliche Schnitthöhe (H) eines abgeschlossenen Arbeitsprozesses herangezogen werden kann.

23. Erntemaschine zur Anwendung des Verfahrens nach einem oder mehreren der vorhergehenden Ansprüche, **dadurch gekennzeichnet, dass** der Fahrer über zumindest eine Auswerteeinheit (11) zur Ermittlung der Schnitthöhe (H) mit einer Anzeige- und Eingabeeinheit (12) zur Visualisierung und Editierbarkeit der ermittelten Schnitthöhen (H), in Wirkverbindung steht.

24. Erntemaschine zur Anwendung des Verfahrens nach einem oder mehreren der vorhergehenden Ansprüche, **dadurch gekennzeichnet, dass** die landwirtschaftliche Erntemaschine (1) eine Vielzahl von Arbeitseinheiten (3) aufnimmt und jeder Arbeitseinheit (3) zumindest einen Sensor (6) und eine Auswerteeinheit (11) zur Ermittlung der Schnitthöhe (H) mit einer Anzeige- und Eingabeeinheit (12) zur Visualisierung und Editierbarkeit der ermittelten Schnitthöhen (H) zugeordnet ist.

25. Erntemaschine zur Anwendung des Verfahrens nach einem oder mehreren der vorhergehenden Ansprüche, **dadurch gekennzeichnet, dass** die Erntemaschine (1) einen Maishäcksler, einen Mähdrescher oder ein selbstfahrendes Mähwerk umfasst.

## Claims

1. A method of ascertaining data for the production of documentation as a cutting height protocol during the ongoing working process of a harvester (1) with at least one working unit (3) for harvesting stalk crop material, **characterised in that** the instantaneous cutting height (Hₘᵢ) can be detected by a measuring procedure in the ongoing working process and can be continuously stored.

2. A method according to claim 1 **characterised in that** the measurement values of the cutting heights (Hₘᵢ) are cumulatively detected and stored.

3. A method according to claim 1 and claim 2 **characterised in that** the cumulatively detected measurement values (Hₘᵢ) are used for forming mean values (H₁, H₂, H₃, H_{N}), (E₁, E₂, E₂, E_{N}) in respect of the cutting height (H).

4. A method according to one or more of the preceding claims **characterised in that** the measurement values (Hₘᵢ) are associated with interval classes (K₁, K₂, K₃ to K_{N}).

5. A method according to one or more of the preceding claims **characterised in that** the accumulated measurement values (Hₘᵢ) of an interval class (K₁, K₂, K₃ to K_{N}) are used for forming a mean cutting height (H₁, H₂, H₃, H_{N}) as a mean value of the respective interval class (K₁, K₂, K₃ to K_{N}).

6. A method according to one or more of the preceding claims **characterised in that** the magnitudes of the mean cutting height (H₁, H₂, H₃, H_{N}) are continuously stored associated with the respective interval class (K₁, K₂, K₃ to K_{N}).

7. A method according to one or more of the preceding claims **characterised in that** the magnitudes of the mean cutting height (H₁, H₂, H₃, H_{N}) are detected and continuously stored.

8. A method according to one or more of the preceding claims **characterised in that** the number of the measurement points of the instantaneous cutting height (Hₘᵢ) and/or the number of the interval classes (K₁, K₂, K₃, K_{N}) formed are instantaneously detected and continuously stored.

9. A method according to one or more of the preceding claims **characterised in that** the cutting heights (Hₘᵢ) and/or (H₁, H₂, H₃ to H_{N}) are used for continuous mean value formation of the averaged cutting height (E₁, E₂, E₂ to E_{N}).

10. A method according to one or more of the preceding claims **characterised in that** the magnitudes of the averaged cutting height (E₁. E₂, E₂ to E_{N}) are continuously ascertained and stored.

11. A method according to one or more of the preceding claims **characterised in that** the value ascertained in the ongoing working process in respect of the averaged cutting height (E_{N}) represents the instantaneous averaged cutting height (H) of the progress of work from the beginning of the starting point (7).

12. A method according to one or more of the preceding claims **characterised in that** the ascertained measurement values (H₁, H₂, H₃ to H_{N}) and/or (E₁, E₂, E₃ to E_{N}) are stored in digitised form in such a way that they can be called up.

13. A method according to one or more of the preceding claims **characterised in that** the measurement values (Hₘᵢ) formed in respect of the cutting height configuration are detected by sensor means with measurement value sensors with an analog or digital output signal.

14. A method according to one or more of the preceding claims **characterised in that** the measurement values (Hₘᵢ) formed are detected in dependence on travel and stored.

15. A method according to one or more of the preceding claims **characterised in that** the measurement values (Hₘᵢ) formed are detected in dependence on time and stored.

16. A method according to one or more of the preceding claims **characterised in that** the mean cutting height (E_{N}) over the cutting height (Hₘᵢ) can be continuously shown and displayed at the working position of the driver during the working process.

17. A method according to one or more of the preceding claims **characterised in that** a cutting height protocol (10) can be supplemented by operating detection data of the harvester (1) and/or customer and supplier data.

18. A method according to one or more of the preceding claims **characterised in that** the cutting height protocol (10) can be storably called up and read out on board the harvester (1).

19. A method according to one or more of the preceding claims **characterised in that** the cutting height protocol can be represented in relation to travel and/or time in the form of a mean value graph (9) on a monitor on board the harvester (1).

20. A method according to one or more of the preceding claims **characterised in that** the cutting height protocol in relation to travel and/or time can be read out in such a way that it can be called up as a mean value graph (9) as a paper printout on board the harvester (1).

21. A method according to one or more of the preceding claims **characterised in that** a cutting height protocol (10) can be stored and/or can be adapted to be called up and/or can be read out in conjunction with a GPS-supported harvest mapping.

22. A method according to one or more of the preceding claims **characterised in that** the averaged cutting height (E_{N}) can be used on the basis of a cutting height protocol (10) as an assessment parameter for the average cutting height (H) of a concluded working process.

23. A harvester for using the method according to one or more of the preceding claims **characterised in that** the driver is operatively related by way of at least one evaluation unit (11) for ascertaining the cutting height (H) to a display and input unit (12) for display and editability of the ascertained cutting heights (H).

24. A harvester for using the method according to one or more of the preceding claims **characterised in that** the agricultural harvester (1) accommodates a plurality of working units (3) and associated with each working unit (3) are at least one sensor (6) and an evaluation unit (11) for ascertaining the cutting height (H) with a display and input unit (12) for display and editability of the ascertained cutting heights (H).

25. A harvester for using the method according to one or more of the preceding claims **characterised in that** the harvester (1) includes a corn cutter, a combine harvester or a self-propelled reaper.

## Revendications

1. Procédé pour recueillir des données pour établir une documentation servant de récapitulatif des hauteurs de coupe pendant le déroulement du processus de travail d'une machine de récolte (1) équipée d'au moins un module de travail (3) pour récolter des produits à récolter en tiges, **caractérisé en ce que** la hauteur de coupe instantanée (Hₘᵢ) peut être enregistrée par des moyens métrologiques pendant le déroulement du processus de travail et être mémorisée en continu.

2. Procédé selon la revendication 1, **caractérisé en ce que** les valeurs mesurées des hauteurs de coupe (Hₘᵢ) sont enregistrées et mémorisées de manière cumulative.

3. Procédé selon la revendication 1 et 2, **caractérisé en ce que** les valeurs mesurées enregistrées de manière cumulative (Hₘᵢ) sont utilisées pour former des valeurs moyennes (H₁, H₂, H₃, H_{N}), (E₁, E₂, E₃, E_{N}) relatives à la hauteur de coupe (H).

4. Procédé selon une ou plusieurs des revendications précédentes, **caractérisé en ce que** les valeurs mesurées (Hₘᵢ) sont affectées à des classes d'intervalles (K₁, K₂, K₃ à K_{N}).

5. Procédé selon une ou plusieurs des revendications précédentes, **caractérisé en ce que** les valeurs mesurées (Hₘᵢ) cumulées d'une classe d'intervalle (K₁, K₂, K₃ à K_{N}) sont utilisées pour former une hauteur de coupe moyenne (H₁, H₂, H₃, H_{N}) servant de valeur moyenne des classes d'intervalles respectives (K₁, K₂, K₃ à K_{N}) .

6. Procédé selon une ou plusieurs des revendications précédentes, **caractérisé en ce que** les valeurs de hauteur de coupe moyenne (H₁, H₂, H₃, H_{N}) affectées aux classes d'intervalles respectives (K₁, K₂, K₃ à K_{N}) sont mémorisées en continu.

7. Procédé selon une ou plusieurs des revendications précédentes, **caractérisé en ce que** les valeurs de hauteur de coupe moyenne (H₁, H₂, H₃, H_{N}) sont enregistrées et mémorisées en continu.

8. Procédé selon une ou plusieurs des revendications précédentes, **caractérisé en ce que** le nombre de points de mesure de la hauteur de coupe instantanée (Hₘᵢ) et/ou le nombre de classes d'intervalles (K₁, K₂, K₃, K_{N}) formées sont enregistrés de manière instantanée et mémorisés en continu.

9. Procédé selon une ou plusieurs des revendications précédentes, **caractérisé en ce que** les hauteurs de coupe (Hₘᵢ) et/ou (H₁, H₂, H₃ à H_{N}) sont utilisées pour la formation continue de la moyenne de la hauteur de coupe moyennée (E₁, E₂, E₃ à E_{N}).

10. Procédé selon une ou plusieurs des revendications précédentes, **caractérisé en ce que** les valeurs de hauteur de coupe moyennée (E₁, E₂, E₃ à E_{N}) sont déterminées et mémorisées en continu.

11. Procédé selon une ou plusieurs des revendications précédentes, **caractérisé en ce que** la valeur de hauteur de coupe moyennée (E_{N}) déterminée pendant le déroulement du processus de travail représente la hauteur de coupe moyennée instantanée (H) de l'avancement du travail depuis le point de départ (7).

12. Procédé selon une ou plusieurs des revendications précédentes, **caractérisé en ce que** les valeurs mesurées déterminées (H₁, H₂, H₃ à H_{N}) et/ou (E₁, E₂, E₃ à E_{N}) sont mémorisées avec la possibilité d'être lues sous forme numérique.

13. Procédé selon une ou plusieurs des revendications précédentes, **caractérisé en ce que** les valeurs mesurées formées (Hₘᵢ) sont enregistrées, en tant que variation de la hauteur de coupe, par détection au moyen de capteurs de mesure à signal de sortie analogique ou numérique.

14. Procédé selon une ou plusieurs des revendications précédentes, **caractérisé en ce que** les valeurs mesurées formées (Hₘᵢ) sont enregistrées en fonction de la course et mémorisées.

15. Procédé selon une ou plusieurs des revendications précédentes, **caractérisé en ce que** les valeurs mesurées formées (Hₘᵢ) sont enregistrées en fonction du temps et mémorisées.

16. Procédé selon une ou plusieurs des revendications précédentes, **caractérisé en ce que** la hauteur de coupe moyenne (E_{N}) calculée à partir de la hauteur de coupe (Hₘᵢ) peut être affichée en continu pendant le processus de travail et visualisée au niveau du poste de travail du conducteur.

17. Procédé selon une ou plusieurs des revendications précédentes, **caractérisé en ce qu'**un récapitulatif des hauteurs de coupe (10) peut être complété par des données d'exploitation enregistrées sur la machine de récolte (1) et/ou par des données propres au client ou à l'entrepreneur.

18. Procédé selon une ou plusieurs des revendications précédentes, **caractérisé en ce que** le récapitulatif des hauteurs de coupe (10) peut être appelé et consulté de manière mémorisable à bord de la machine de récolte (1).

19. Procédé selon une ou plusieurs des revendications précédentes, **caractérisé en ce que** le récapitulatif des hauteurs de coupe peut être affiché en fonction de la course et/ou du temps, sous la forme d'un graphe de valeurs moyennes (9) sur un moniteur à bord de la machine de récolte (1).

20. Procédé selon une ou plusieurs des revendications précédentes, **caractérisé en ce que** le récapitulatif des hauteurs de coupe en fonction de la course et/ou du temps peut, après avoir été appelé, être consulté sous la forme d'un graphe de valeurs moyennes (9) sur sortie papier à bord de la machine de récolte (1).

21. Procédé selon une ou plusieurs des revendications précédentes, **caractérisé en ce qu'**un récapitulatif des hauteurs de coupe (10) peut être mémorisé et/ou être appelé et/ou être consulté en association avec une cartographie de récolte assistée par GPS.

22. Procédé selon une ou plusieurs des revendications précédentes, **caractérisé en ce que** la hauteur de coupe moyennée (E_{N}) basée sur un récapitulatif des hauteurs de coupe (10) peut être utilisée comme grandeur d'évaluation pour la hauteur de coupe moyenne (H) d'un processus de travail achevé.

23. Machine de récolte pour la mise en oeuvre du procédé selon une ou plusieurs des revendications précédentes, **caractérisée en ce que**, par l'intermédiaire d'au moins une unité d'exploitation (11) destinée à déterminer la hauteur de coupe (H), le conducteur est en liaison active avec une unité d'affichage et d'entrée (12) permettant de visualiser et d'éditer les hauteurs de coupe (H) déterminées.

24. Machine de récolte pour la mise en oeuvre du procédé selon une ou plusieurs des revendications précédentes, **caractérisée en ce que** la machine agricole de récolte (1) comporte une pluralité d'unités de travail (3) et qu'à chaque unité de travail (3) sont affectés au moins un capteur (6) et une unité d'exploitation (11) pour déterminer la hauteur de coupe (H), avec une unité d'affichage et d'entrée (12) pour visualiser et éditer les hauteurs de coupe (H) déterminées.

25. Machine de récolte pour la mise en oeuvre du procédé selon une ou plusieurs des revendications précédentes, **caractérisée en ce que** la machine de récolte (1) englobe une ensileuse à maïs, une moissonneuse-batteuse ou un outil de coupe automoteur.
